# EUROPÄISCHE PATENTSCHRIFT

(11) **EP 3 344 527 B1**
(45) Veröffentlichungstag und Bekanntmachung des Hinweises auf die Patenterteilung: **26.06.2019**
(21) Anmeldenummer: 16733933.2
(22) Anmeldetag: 28.06.2016
(51) Int. Cl.: B62M 6/60, B62M 6/65, B62M 23/02, B62M 11/18

(54) **MOTORRAD MIT ELEKTRISCH ANTREIBBAREM VORDERRAD**
MOTORCYCLE WITH AN ELECTRICALLY DRIVEABLE FRONT WHEEL
MOTOCYCLETTE COMPRENANT UNE ROUE AVANT ENTRAÎNÉE ÉLECTRIQUEMENT

(30) Priorität: 04.09.2015 DE 102015216949
(43) Veröffentlichungstag der Anmeldung: 11.07.2018
(73) Patentinhaber: Bayerische Motoren Werke Aktiengesellschaft, 80809 München (DE)
(72) Erfinder: MÜLLER, Gerhard, 82396 Paehl (DE); GARNWEITNER, Franz, 85375 Neufahrn (DE); REINER, Gerhard, 82396 Paehl (DE); WECK, Werner, 81475 Muenchen (DE); WERNER, Ernst August, 52074 Aachen (DE)
(86) Internationale Anmeldenummer: PCT/EP2016/064986
(87) Internationale Veröffentlichungsnummer: WO 2017/036628

(56) Entgegenhaltungen:
- WO-A1-93/03956
- KR-A- 20150 009 320

## Beschreibung

Die Erfindung betrifft ein Fahrzeug gemäß dem Oberbegriff des Patentanspruchs 1. Dokument WO 93/03956A1 offenbart den Oberbegriff des Anspruchs 1.

Zu den gattungsgemäßen Fahrzeugen gehören Fahrzeuge mit einem mittels einer ersten Antriebsanordnung antreibbaren Vorderrad und einem mittels einer zweiten Antriebsanordnung antreibbaren Hinterrad, wie beispielsweise Motorräder, die über einen zusätzlichen elektrischen Antrieb des Vorderrades verfügen. Bei diesen Fahrzeugen ist der zugehörige Elektromotor innerhalb des Vorderrades integriert. Zusätzlich kann ein zwischen dem Elektromotor und dem anzutreibenden Vorderrad zwischengeschaltetes Untersetzungsgetriebe vorgesehen sein.

Ein entsprechendes Fahrzeug ist beispielsweise in der DE 10 2007 006 167 A1 beschrieben, wobei der elektrische Antrieb des Vorderrades einen regulären Hinterradantrieb im normalen Fahrbetrieb unterstützen und eine Geländetauglichkeit des Fahrzeugs erhöhen soll.

Insbesondere tourentaugliche Motorräder weisen aufgrund zusätzlicher Elemente, wie Gepäcksysteme, Zusatztanks oder aufwendigen Verkleidungselementen, ein erhöhtes Gesamtgewicht auf. Dieses erfordert vor allem beim langsamen Bewegen oder Rangieren des Fahrzeugs einen großen Kraftaufwand und einen sicheren Halt des Fahrers. Gleiches gilt ebenso für andere, nicht-tourentauglichen Motorräder, aber auch für andere zwei-, drei- oder vierrädrige motorradähnliche Fahrzeuge, wie Scooter, Roller, Quads oder Trikes.

Aufgabe der Erfindung ist es daher, eine Handhabung dieser Fahrzeuge zu erleichtern und eine sichere und bedienungsfehlerfreie Unterstützung zu schaffen.

Diese Aufgabe wird gelöst mit einem Fahrzeug mit den Merkmalen des Patentanspruchs 1.

Vorteilhafte Ausführungsformen ergeben sich aus den jeweils abhängigen Patentansprüchen.

Demnach wird ein Fahrzeug mit einem mittels einer ersten Antriebsanordnung antreibbaren Vorderrad und einem mittels einer zweiten Antriebsanordnung antreibbaren Hinterrad vorgestellt, wobei die erste Antriebsanordnung in dem Vorderrad integriert ist und
- einen Elektromotor zum wahlweisen drehbeweglichen Antreiben des Vorderrades, und
- ein zwischen dem Elektromotor und dem anzutreibenden Vorderrad geschaltetes Untersetzungsgetriebe umfasst.

Zusätzlich umfasst die erste Antriebsanordnung außerdem eine betätigbare Kupplung zum wahlweisen Koppeln oder Entkoppeln des Elektromotors mit dem Untersetzungsgetriebe. Die Steuereinheit ist zum betätigen der Kupplung ausgestattet und derart konfiguriert, dass das Koppeln der ersten Antriebsanordnung ausschließlich für den Fall möglich ist, dass sich die zweite Antriebsanordnung nicht in einem aktiven Betriebszustand befindet.

Diese Ausgestaltung der ersten Antriebsanordnung ermöglicht es, die gesamte erste Antriebsanordnung einschließlich ihrer genannten Komponenten innerhalb eines von dem Vorderrad definierten Raumes anzuordnen und auf diese Weise in dem Vorderrad zu integrieren. Gemäß einer bevorzugten Ausführungsform können die Komponenten zum Beispiel im Nabenbereich des Vorderrades vorgesehen werden, wobei der Nabenbereich derart ausgestaltet sein kann, dass dieser ein die erste Antriebsanordnung einschließlich deren Komponenten umschließendes Gehäuse bildet.

Die beschriebene Anordnung einer Kupplung erlaubt es, den Elektromotor (zumindest dessen Abtriebsseite) im Bedarfsfall mit dem Untersetzungsgetriebe zu koppeln, um das Vorderrad anzutreiben. Dagegen kann der Elektromotor mittels der Kupplung von dem Untersetzungsgetriebe entkoppelt werden, sofern kein elektrischer Antrieb des Vorderrades gewünscht wird. Diese Entkopplung erfolgt mechanisch und verhindert, dass der Elektromotor in seinem inaktiven Zustand während eines ausschließlichen Antriebs des Fahrzeugs mittels der zweiten Antriebsanordnung ebenfalls in Drehbewegung versetzt wird und als Generator fungiert. Eine Bremswirkung durch Induktionseffekte wird somit wirkungsvoll vermieden.

Der Elektromotor kann also gezielt (ein)gekoppelt werden, wenn ein Antrieb des Vorderrades gewünscht wird. Dies kann beispielsweise zum Rangieren des Fahrzeugs der Fall sein. Um jedoch einer Fehlbetätigung vorzubeugen und ein möglichst leichtgängiges Rangieren zu ermöglichen, kann optional vorgesehen werden, dass die dem Hinterrad zugeordnete zweite Antriebsanordnung, welche den eigentlichen Hauptantrieb des Fahrzeugs darstellt, abgeschaltet oder zumindest vom Hinterrad entkoppelt wird. Stattdessen übernimmt der mit dem Vorderrad gekoppelte Elektromotor den alleinigen Antrieb des Fahrzeugs durch Antrieb des Vorderrades.

Je nach Drehrichtung des Elektromotors ist (im gekoppelten Zustand) grundsätzlich eine Vorwärts- oder Rückwärtsbewegung des Fahrzeugs möglich. Einschränkend kann jedoch eine Ausgestaltung des Untersetzungsgetriebes wirken, welches nachfolgend noch im Detail erläutert wird, falls dieses lediglich eine einzige Drehrichtung erlaubt. In diesem Fall ist die erste Antriebsanordnung vorzugsweise zur Rückwärtsbewegung des Fahrzeugs ausgestaltet.

Des Weiteren kann die Kupplung eine mechanische Kupplung sein, insbesondere eine Reibkupplung oder eine Klauenkupplung. Die mechanisch betätigbare Kupplung kann über einen elektrisch betätigbaren Stellmotor unmittelbar oder lediglich mittelbar, zum Beispiel über eine zwischengeschaltete Kinematik oder einen zwischengeschalteten Bowdenzug, betätigt werden. Alternativ ist es ebenso möglich, die mechanische Kupplung derart auszugestalten, dass diese mittels eines Bowdenzuges manuell vom Fahrer betätigbar ist. Sowohl für die manuelle als auch die elektrische Betätigung kann ein entsprechender Schalter oder Taster am Lenker zur Bedingung durch den Fahrer vorgesehen sein.

Gemäß einer bevorzugten Ausführungsform ist ein Stator des Elektromotors drehfest mit einer Vorderradaufhängung verbunden und eine Abtriebsseite des Untersetzungsgetriebe drehfest mit dem (relativ zu der Vorderradaufhängung) rotierbaren Vorderrad verbunden. Die drehfeste Verbindung des Stators mit der Vorderradaufhängung ist entweder als unmittelbare und direkte Verbindung oder als mittelbare und drehfeste Verbindung über zusätzliche zwischengeordnete Elemente, wie Motorgehäuse, Strukturelemente und/oder über eine ebenfalls drehfeste Radachse zu verstehen.

Ist der Elektromotor zum Beispiel als Innenläufer-Hohlwellenmotor ausgeführt, so ist der Stator ebenfalls drehfest mit der Vorderradaufhängung des Fahrzeugs verbunden, wohingegen der Rotor als Innenläufer innerhalb des Stators rotierbar angeordnet ist, welcher den Rotor in Umfangsrichtung umschließt.

Das Fahrzeug kann außerdem eine Steuereinheit umfassen, die zum Steuern und/oder Regeln der ersten Antriebsanordnung, insbesondere des Elektromotors ausgestaltet ist. Dies bedeutet, dass mittels der Steuereinheit zum Beispiel eine Drehzahl des Elektromotors gesteuert/geregelt werden kann. Alternativ oder zusätzlich kann die Steuereinheit mit der Kupplung wirkgekoppelt sein, um deren Betätigung zu steuern. Hierzu kann die Steuereinheit beispielsweise den beschriebenen elektrisch betätigbaren Stellmotor zur elektrischen Betätigung der Kupplung entsprechend ansteuern, sofern dieser vorgesehen ist.

Gemäß einer weiteren Ausführungsform ist die Steuereinheit in der ersten Antriebsanordnung umfasst und in dem Vorderrad integriert. Dies bedeutet, dass die Steuereinheit innerhalb des Vorderrades, vorzugsweise ebenfalls im Nabenbereich, angeordnet ist.

Wie bereits angedeutet, besteht die Möglichkeit das Vorderrad derart auszugestalten, dass dieses ein die erste Antriebsanordnung und deren Komponenten in seinem Inneren aufnehmendes Gehäuse bildet. Dies hat den Vorteil, dass alle wesentlichen und für den Antrieb des Vorderrades erforderlichen Komponenten, optional auch die Steuereinheit, in dem Vorderrad vereint und integriert sind. Das Vorderrad stellt somit ein eigenständiges Modul dar, welches lediglich einen Stromanschluss für die Energiezufuhr des Elektromotors erfordert sowie eine eventuelle Anbindung an ein BUS-System des Fahrzeugs. Die Steuereinheit kann optional scheibenförmig ausgebildet sein und somit besonders bauraumsparend innerhalb des Gehäuses positioniert werden.

Gemäß einer weiteren Ausführungsform ist es möglich die Steuereinheit mit einem BUS-System des Fahrzeugs, insbesondere einem CAN-Bus, zumindest zum Abrufen von Informationen, insbesondere von Informationen zu Fahrzeugzuständen, zu koppeln. Diese Verbindung ermöglicht es der Steuereinheit Informationen aus dem BUS-System des Fahrzeugs abzurufen und diese anschließend zu verarbeiten.

Außerdem kann die Steuereinheit dazu ausgebildet sein, dass ein Steuern/Regeln des Elektromotors und/oder eine Betätigung der Kupplung in Abhängigkeit von den abgefragten Informationen erfolgt. So können beispielsweise Informationen zu Fahrzeugzuständen abgerufen und entsprechende Steuerschritte betreffend den Elektromotor und/oder die Kupplung in Reaktion auf die jeweiligen Informationen erfolgen.

Anhand der abgefragten Informationen kann auf elektronischem Wege eine Sicherung vorgesehen werden, um ein unbeabsichtigtes Aktivieren der ersten Antriebsanordnung abzusichern. Auf diese Weise lässt sich die Aktivierung vom Vorliegen vordefinierter Parameter und/oder Parameterwerte abhängig machen, die mittels der über das BUS-System abgefragten Informationen bereitgestellt werden. Liegen die definierten Voraussetzungen nicht vor, wird eine Aktivierung der ersten Antriebsanordnung von der Steuereinheit verhindert.

Gemäß der Erfindung, ist die Steuereinheit derart konfiguriert, dass das Koppeln der ersten Antriebsanordnung ausschließlich für den Fall möglich ist, dass sich die zweite Antriebsanordnung nicht in einem aktiven Betriebszustand befindet. Dies bedeutet, dass die dem Hinterrad zugeordnete zweite Antriebsanordnung in diesem Fall das Fahrzeug nicht aktiv antreiben darf. Andernfalls wird die Ansteuerung der Kupplung beziehungsweise des Stellmotors zur Betätigung der Kupplung (sofern vorhanden) blockiert. Die Information über den aktuellen Betriebszustand der zweiten Antriebsanordnung erhält die Steuereinheit idealerweise über das BUS-System.

Mit anderen Worten dargestellt soll also insbesondere während einer Vorwärtsfahrt im Normalbetrieb des Fahrzeugs, bei dem der Antrieb mittels der zweiten Antriebsanordnung erfolgt, der Elektromotor aus Sicherheitsgründen entkoppelt sein und bleiben. Ein "Mitschleppen" des Elektromotors im Normalbetrieb des Fahrzeugs sowie ein dadurch verursachter "Generatorbetrieb" mit entsprechender Bremswirkung und induzierten Hochvolt-Spannungen wird verhindert.

Auf diese Weise kann sichergestellt werden, dass der normale Fahrbetrieb des Fahrzeugs nicht durch die erste Antriebsanordnung negativ beeinflusst wird. Aufgrund des Entkoppelns werden keinerlei Drehmomente oder Bremsleistungen am Vorderrad bewirkt. Standardmäßig kann die erste Antriebsanordnung derart ausgestaltet sein, dass im aktiven Betriebszustand der zweiten Antriebsanordnung oder auch im Ruhezustand des Fahrzeugs der Elektromotor stets entkoppelt ist.

Entsprechen eines weiteren Ausführungsbeispiels kann die Steuereinheit derart konfiguriert sein, dass die Betätigung des Elektromotors oder der Kupplung nur dann erfolgen kann, wenn die Zündung des Fahrzeugs eingeschaltet und gleichzeitig die zweite Antriebsanordnung stillsteht oder zumindest entkoppelt ist. Die Information über den Zustand der zweiten Antriebsanordnung erfolgt dabei zum Beispiel über das BUS-System.

Für alle genannten Beispiele gilt selbstverständlich, dass ebenso andere Parameter oder Informationen auswertbar sind, mit deren Hilfe ein gleichzeitiger Antrieb des Fahrzeugs durch die erste und die zweite Antriebsanordnung verhindert werden kann.

Des Weiteren kann die erste Antriebsanordnung optional Sicherungsmittel umfassen, die dazu ausgebildet sind, ein unbeabsichtigtes Koppeln des Elektromotors mit dem Untersetzungsgetriebe mechanisch zu verhindern, insbesondere während eines aktiven Betriebszustandes der zweiten Antriebsanordnung. Es soll dadurch alternativ oder zusätzlich zu der beschriebenen elektronischen Sicherung auch auf mechanischem Wege eine Fehlbedienung der ersten Antriebsanordnung ausgeschlossen werden, die andernfalls zu eventuellen Beschädigungen des Fahrzeugs führen könnte.

Dies wird beispielsweise durch eine mechanische Sicherung erzielt, die ein Koppeln der Kupplung in einem gesicherten Zustand verhindert. Hierzu eignen sich insbesondere mechanisch eingreifende Verzahnungs-, Verrastungselemente und/oder federbelastete Sperrelemente, die eine Koppelbewegung der Kupplung sperren und vor einer Betätigung des Elektromotors zunächst freigegeben werden müssen. Alternativ oder zusätzlich kann die Kupplung selbst derart federbelastet ausgebildet sein, dass ein Koppeln stets gegen die Federkraft erfolgen muss, um ein unbeabsichtigtes Schließen der Kupplung zu verhindern.

Gemäß einer weiteren Ausführungsform ist das Untersetzungsgetriebe ein ein- oder mehrstufiges Planetengetriebe, insbesondere ein zweistufiges Planetengetriebe, besonders bevorzugt ein "Wolfrom"-Getriebe. Derartige Getriebe ermöglichen die Bereitstellung besonders großer Untersetzungsverhältnisse, insbesondere im Falle von mehrstufig aufgebauten Planetengetrieben. Eine besonders bevorzugte Ausführungsform stellt das sogenannte "Wolfrom" Getriebe dar, welches ein Spezialfall des zweistufigen Planetengetriebes mit zweistufigen Planetenräder ist.

Zum Zwecke eines Rangierbetriebs besonders geeignete Untersetzungsverhältnisse liegen für alle genannten Planetengetriebe bei mindestens 10:1 oder höher, vorzugsweise bei mindestens 100:1 oder höher. Dies bedeutet, dass die Eingangsdrehzahl mindestens 10-mal, vorzugsweise mindestens 100-mal, größer ist, als die Ausgangsdrehzahl des jeweiligen Planetengetriebes.

Als alternative Untersetzungsgetriebe können aber auch sogenannte "Harmonic Drive" Getriebe, exzentrische Getriebe (sogenannte "Cyclo Getriebe") oder achsparallel versetzte Getriebe, insbesondere mit Stirnradstufen, Schneckengetrieben und/oder Kronenradgetriebe, eingesetzt werden. Optional weisen diese eines der oben genannten Untersetzungsverhältnisse für den Rangierbetrieb auf.

In jedem Fall ermöglicht das hohe erzielbare Untersetzungsverhältnis, dass der Elektromotor schnell drehend und mit einem geringen Drehmoment ausgeführt werden kann. Entsprechend ist ein Bauraumbedarf äußerst kompakt, ein Eigengewicht niedrig und eine Leistungsaufnahme ebenfalls sehr gering. Ein weiterer Vorteil einer derartigen Anordnung liegt in der besonderen Eignung für ein besonders kontrolliertes und langsames Fahren, welches sich in besonderer Weise zum Rangieren des Fahrzeugs eignet.

Zur Versorgung mit elektrischer Energie kann die erste Antriebsanordnung mit einer Batterie des Fahrzeugs gekoppelt sein. Dementsprechend ist es möglich eine ohnehin im Fahrzeug vorgesehene Fahrzeugbatterie zur Versorgung zu nutzen. Hierbei handelt es sich meist um 12 Volt Fahrzeugbatterien, selbstverständlich sind jedoch auch andere Fahrzeugbatterien mit einer anderen Betriebsspannung einsetzbar. Optional kann die Batterie zusätzlich mit erhöhter Kapazität ausgeführt sein, um einen gelegentlichen Betrieb der ersten Antriebsanordnung zu ermöglichen. Alternativ oder zusätzlich kann das Fahrzeug über eine zusätzliche (zweite) Batterie verfügen, die für den Betrieb der ersten Antriebsanordnung vorgesehen und ausgelegt ist.

Wie voranstehend angedeutet, kann die erste Antriebsanordnung gemäß einer weiteren Ausführungsform zum langsamen Rangierbetrieb des Fahrzeugs in Vorwärts- und/oder Rückwärtsrichtung ausgestaltet sein, insbesondere für eine Rangiergeschwindigkeit zwischen 0 und 5km/h, vorzugsweise zwischen 0 und 2 km/h. Dies bedeutet, dass die erste Antriebsanordnung nicht zur eigentlichen Fortbewegung des Fahrzeugs über große Distanzen (Normalbetrieb) ausgelegt ist. Stattdessen ist die erste Antriebsanordnung zur Handhabung bei niedrigen Geschwindigkeiten, vorzugsweise in Schrittgeschwindigkeit, und dementsprechend für kurze Distanzen vorgesehen, wie sie üblicherweise beim Rangieren auftreten. Entsprechend sind der Elektromotor und das gewählte Untersetzungsgetriebe mit einer geeigneten Untersetzung auszulegen.

Ferner kann der Elektromotor vorzugsweise ein Drehmoment zwischen 0,1 und 50Nm, insbesondere zwischen 0,5 und 10Nm aufweisen. Ein derartiger Motor kann mit besonders geringem Bauraumbedarf erstellt sein und dennoch mit Hilfe eines entsprechend ausgebildeten Untersetzungsgetriebe ein für die beabsichtigte Handhabung des Fahrzeugs ausreichendes Drehmoment zwischen 150 und 200 Nm am Vorderrad bereitstellen, welches auch zur Bewältigung kleiner Steigungen, (beispielsweise bis zu 7%) ausreichend ist.

Gemäß einer bevorzugten Ausführungsform ist das Fahrzeug ein Motorrad oder ein motorradähnliches Einspur- oder Zweispurfahrzeug jeweils mit zwei, drei oder vier Rädern, insbesondere ein Roller, Scooter, Quad, Trike oder ein ähnliches Fahrzeug. Ein entsprechend ausgeführtes Fahrzeug lässt sich dank der Erfindung auch im Falle leichter Steigungen und/oder eines hohen Gewichtes, wie beispielsweise bei tourentauglichen Motorrädern, bei Fahrzeugen mit schwerer und aufwendiger Verkleidung und/oder großen Kraftstofftanks, dennoch leicht und ohne große Kraftanstrengungen für den Fahrer rangieren, insbesondere rückwärtsbewegen.

Außerdem kann die erste Antriebsanordnung einen als permanenterregten Synchronmotor ausgebildeten Elektromotor umfassen, und/oder die zweite Antriebsanordnung einen Elektromotor oder einen Verbrennungsmotor umfassen.

Des Weiteren wird ein Vorderrad zum Einbau in ein Fahrzeug gemäß der gegebenen Beschreibung vorgestellt, jedoch nicht beansprucht, mit einer ersten Antriebsanordnung, die in dem Vorderrad integriert ist und
- einen Elektromotor zum wahlweisen drehbeweglichen Antreiben des Vorderrades, und
- ein zwischen dem Elektromotor und dem anzutreibenden Vorderrad geschaltetes Untersetzungsgetriebe umfasst.

Die erste Antriebsanordnung umfasst außerdem eine betätigbare Kupplung zum wahlweisen Koppeln oder Entkoppeln des Elektromotors mit dem Untersetzungsgetriebe.

Entsprechend können die einzelnen Komponenten gemäß der gegebenen Beschreibung ausgebildet sein.

Ein derartiges Vorderrad stellt ein eigenständiges Modul dar, welches sich beispielsweise an bestehende Fahrzeuge anbringen und nachrüsten lässt, ohne dass größere Anpassungen erforderlich werden. Es muss lediglich eine Versorgung mit elektrischer Energie für den Elektromotor bereitgestellt werden. Je nach Anordnung der Steuereinheit ist diese im Fahrzeug vorgesehen und zu kontaktieren, andernfalls ist diese zum Beispiel innerhalb des Vorderrades integrierbar.

Die Erfindung wird nachfolgend anhand eines grundsätzlichen Aufbaus und eines konkreten Ausführungsbeispiels unter Bezugnahme auf die Zeichnungen näher erläutert. Es zeigen:
Fig. 1 eine schematische Darstellung eines grundsätzlichen Aufbaus einer Vorderradanordnung gemäß der Beschreibung, und
Fig. 2 ein Ausführungsbeispiel einer ersten Antriebsanordnung mit einem Wolfrom-Untersetzungsgetriebe für ein Vorderrad gemäß der Beschreibung.

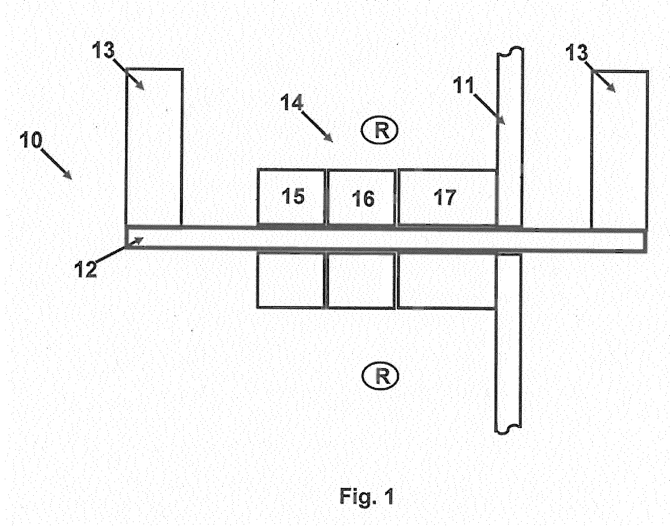

Fig. 1 stellt in lediglich schematischer Darstellung ausschnittsweise einen grundsätzlichen Aufbau einer Vorderradanordnung 10 für ein Motorrad oder ein mötorradähnliches Einspur- oder Zweispurfahrzeug (nicht dargestellt) gemäß der Beschreibung dar. Die Vorderradanordnung 10 umfasst ein Vorderrad 11, welches rotierbar um eine Radachse 12 ausgebildet ist. Das Vorderrad 11 ist lediglich teilweise dargestellt und weist eine Anzahl von radial erstrecken Speichen oder eine radial erstreckte Radscheibe auf. Die

Radachse 12 ist drehfest mit der Vorderradaufhängung 13 des Fahrzeugs verbunden, welche gabelförmig ausgestaltet ist. Das Vorderrad 11 ist mittels einer ersten Antriebsanordnung 14 antreibbar, die hierzu im Nabenbereich des Vorderrades 11 innerhalb eines von dem Vorderrad 11 definierten und begrenzten Raums R angeordnet und somit in dem Vorderrad 11 integriert ist. Außerdem umfasst die erste Antriebsanordnung 14 die folgenden Komponenten: einen Elektromotor 15 und ein zwischen dem Elektromotor 15 und dem anzutreibenden Vorderrad 11 geschaltetes Untersetzungsgetriebe 17, um das Vorderrad 11 wahlweise anzutreiben.

Zusätzlich umfasst die erste Antriebsanordnung 14 eine betätigbare Kupplung 16 zum wahlweisen Koppeln oder Entkoppeln des Elektromotors 15 mit dem Untersetzungsgetriebe 17.

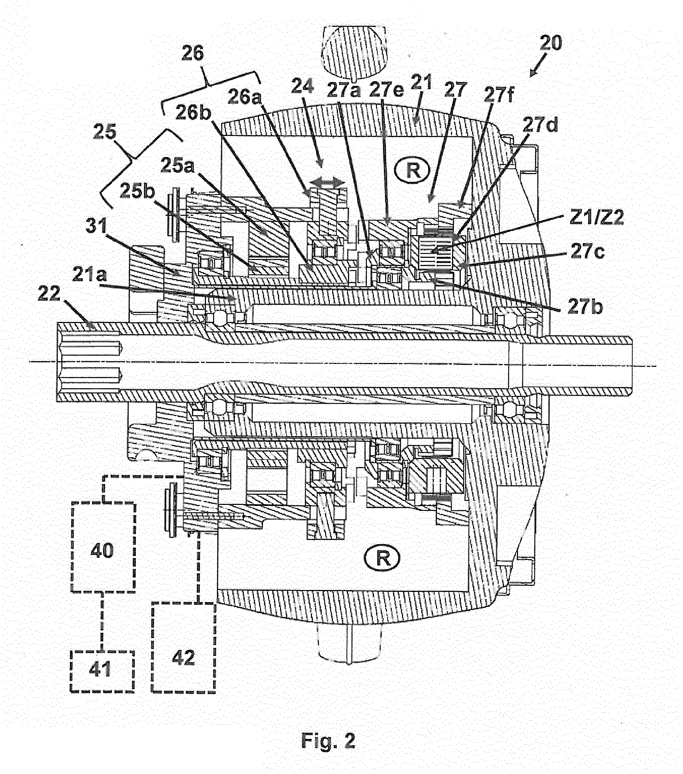

In Fig. 2 ist eine konkrete Ausführungsform einer ersten Antriebsanordnung 24 für eine Vorderradanordnung 20 dargestellt, wobei eine Schnittebene in axialer Richtung der Radachse 22 verläuft. Die Vorderradanordnung 20 umfasst ein lediglich teilweise dargestelltes Vorderrad 21 und eine erste Antriebsanordnung 24 zu dessen Antrieb, wobei die erste Antriebsanordnung 24 mit einem Wolfrom-Untersetzungsgetriebe 27 ausgestaltet ist.

Das Vorderrad 21 ist rotierbar um die fahrzeugfest angeordnete Radachse 22 gelagert und wird von einem Elektromotor 25 der ersten Antriebsanordnung 24 wahlweise drehbeweglich angetrieben, wobei der Elektromotor 25 als Hohlwellenmotor mit Innenläufer ausgeführt ist. Dementsprechend umfasst der Elektromotor 25 einen Stator 25a, welcher einen innenliegenden Rotor 25b in Umfangsrichtung umschließt und drehfest mit der Radachse 22 über ein Halteelement 31 verbunden ist. Dagegen ist der Rotor 25b mit einer hohlen Rotorwelle 32 drehfest verbunden. Gemeinsam mit der hohlen Rotorwelle 32 ist der Rotor 25b drehbeweglich und koaxial auf einem zylinderförmigen Fortsatz 21a des Vorderrades 21 angeordnet, welcher wiederum koaxial und drehbar auf der Radachse 22 angeordnet ist. Diese Anordnung erlaubt es somit dem Rotor 25b und der Rotorwelle 32 mit einer anderen Umdrehungsgeschwindigkeit um die stehende Radachse 22 zu rotieren, als das Vorderrad 21 mit dessen zylinderförmigem Fortsatz 21a.

Der Rotor 25b bildet die Abtriebsseite des Elektromotors 25 und ist über die hohle Rotorwelle 32 mit einem Kupplungsrad 26b verbunden. Das Kupplungsrad 26b ist ebenfalls drehfest mit der Rotorwelle 32 verbunden, jedoch in axialer Richtung (siehe Pfeil) der Radachse 22 verschiebbar ausgestaltet. Folglich dreht sich das Kupplungsrad 26b gemeinsam mit dem Rotor 25b und der hohlen Rotorwelle 32, kann jedoch zum wahlweisen Koppeln der Kupplung mit einer Eingangsseite des Untersetzungsgetriebes 27 durch axiales Verschieben verbunden oder getrennt werden. Hierzu sieht das Kupplungsrad 26b einen oder mehrere klauenförmige Fortsätze vor, die in Richtung des Untersetzungsgetriebes 27 gerichtet sind, um dort mit dessen Eingangsseite in drehmomentübertragendem Eingriff gebracht zu werden.

Das Untersetzungsgetriebe 27 ist in der dargestellten Ausführungsform als sogenanntes "Wolfrom"- Getriebe ausgeführt. Demnach wird die Eingangsseite von einem zum Eingriff der Klauen vorbereiteten Sonnenrad 27a definiert, welches koaxial und drehbar gegenüber dem zylinderförmigen Fortsatz 21a des Vorderrades 21 angeordnet ist. Das Sonnenrad 27a stellt auf einer (bezüglich der Radachse 22) radial nach außen gewandten Oberfläche eine Außenverzahnung 27b bereit. Mit dieser Außenverzahnung 27b steht eine Anzahl von Planetenrädern 27d in Eingriff, die in einem Planetenträger 27c gehalten werden. Die Planetenräder 27d sind jeweils zweistufig ausgebildet. Dies bedeutet, dass sie eine erste Stufe mit einer ersten Verzahnung Z1 (linker Abschnitt) sowie eine zweite Stufe mit einer zweiten Verzahnung Z2 (rechter Abschnitt) aufweisen. Die Anzahl der Zähne der ersten Verzahnung Z1 ist geringer als die Verzahnung Z2 der zweiten Verzahnung, beispielsweise 19 Zähne für die erste Verzahnung Z1 und 20 Zähne für die zweite Verzahnung Z2. Die Verzahnung Z1 der ersten Stufe steht also einerseits mit der Außenverzahnung 27b des Sonnenrades 27a in Eingriff. Zusätzlich steht die Verzahnung Z1 der ersten Stufe aber auch mit einem das Sonnenrad 27a und die erste Stufe umgebenden ersten Hohlrad 27e in Eingriff, so dass die erste Stufe ebenso an dem ersten Hohlrad 27e abgewälzt wird.

Das erste Hohlrad 27e wird in der dargestellten Ausführungsform in einem gekoppelten Zustand der Kupplung drehfest mittelbar oder unmittelbar mit dem Stator 25a verbunden. Dies geschieht beispielsweise durch ein äußeres Kupplungshohlrad 26a der Kupplung 26, welches das innerhalb angeordnete Kupplungsrad 26b in dessen Umfangsrichtung umschließt, wobei das Kupplungsrad 26b drehbar gegenüber dem Kupplungshohlrad 26a gelagert ist. Die Kupplung 26 ist derart ausgebildet, dass das Kupplungshohlrad 26a beim Koppeln oder Entkoppeln der Kupplung 26 gemeinsam mit dem Kupplungsrad 26b in der axialen Richtung (siehe Pfeil) bewegt wird. Das Kupplungshohlrad 26a weist ebenfalls eine Anzahl von in Richtung des Untersetzungsgetriebes 27 ausgerichteten klauenartigen Fortsätzen auf, die beim Koppeln mit dem ersten Hohlrad 27e in Eingriff gelangen. Das erste Hohlrad 27e wird somit im gekoppelten Zustand mittelbar über das Kupplungshohlrad 26a drehfest mit dem Stator 25a verbunden und wird somit ebenfalls drehfest gehalten. Wird die Kupplung 26 entkoppelt, so wird das Kupplungshohlrad 26a von dem Untersetzungsgetriebe 27 in der axialen Richtung (siehe Pfeil) weg bewegt, so dass der Eingriff des Kupplungshohlrades 26a mit dem ersten Hohlrad 27e gelöst wird und dieses nicht mehr drehfest gehalten wird, sondern in diesem Fall frei drehbar ist.

Die voranstehend bereits genannten zweiten Stufen der Planetenräder 27d stehen jeweils in Eingriff mit einem zweiten Hohlrad 27f, welches die Abtriebseite des Untersetzungsgetriebes 27 darstellt und mit dem Vorderrad 21 drehfest verbunden ist.

Zusätzlich kann eine Steuereinheit 40 vorgesehen sein, die zum Steuern der ersten Antriebsanordnung 24, insbesondere des Elektromotors 25 und/oder zum Betätigen der Kupplung 26, ausgestaltet ist. Optional kann die Steuereinheit als Teil der ersten Antriebsanordnung in dem Vorderrad integriert sein (nicht dargestellt).

Des Weiteren ist es möglich, dass die Steuereinheit 40 mit einem BUS-System 41 des Fahrzeugs, insbesondere einem CAN-Bus, zumindest zum Abrufen von Informationen, beispielsweise von Informationen zu Fahrzeugzuständen, gekoppelt ist. Dies ermöglicht der Steuereinheit 40 ein Steuern des Elektromotors 25 und/oder eine Betätigung der Kupplung 26 in Abhängigkeit von den abgefragten Informationen.

Zum Betrieb der ersten Antriebsanordnung 24 und zur Versorgung des Elektromotors 25 mit elektrischer Energie ist die erste Antriebsanordnung 24 beziehungsweise der Elektromotor 25 mit einer Batterie 42 des Fahrzeugs gekoppelt.

## Patentansprüche

1. Fahrzeug mit einem mittels einer ersten Antriebsanordnung (14,24) antreibbaren Vorderrad (11,21) und einem mittels einer zweiten Antriebsanordnung antreibbaren Hinterrad, wobei die erste Antriebsanordnung (14,24) in dem Vorderrad (11,21) integriert ist und
- einen Elektromotor (15,25) zum wahlweisen drehbeweglichen Antreiben des Vorderrades (11,21), und
ein zwischen dem Elektromotor (15,25) und dem anzutreibenden Vorderrad (11,21) geschaltetes Untersetzungsgetriebe (17,27) umfasst, wobei die erste Antriebsanordnung (14,24) außerdem eine betätigbare Kupplung (16,26) zum wahlweisen Koppeln oder Entkoppeln des Elektromotors (15,25) mit dem Untersetzungsgetriebe (17,27) umfasst **dadurch gekennzeichnet, dass** das Fahrzeug eine Steuereinheit (40) umfasst, die zum Betätigen der Kupplung (26) ausgestaltet ist und derart konfiguriert ist, dass das Koppeln der ersten Antriebsanordnung ausschließlich für den Fall möglich ist, dass sich die zweite Antriebsanordnung nicht in einem aktiven Betriebszustand befindet.

2. Fahrzeug nach Anspruch 1, **dadurch gekennzeichnet, dass** die Kupplung (16,26) eine mechanische Kupplung, insbesondere eine Reibkupplung oder eine Klauenkupplung, ist.

3. Fahrzeug nach einem der Ansprüche 1 bis 2, **dadurch gekennzeichnet, dass** ein Stator (25a) des Elektromotors (25) drehfest mit einer Vorderradaufhängung ausgebildet und eine Abtriebsseite des Untersetzungsgetriebe (27) drehfest mit dem Vorderrad (21) verbunden ist.

4. Fahrzeug nach einem der Ansprüche 1 bis 3, **dadurch gekennzeichnet, dass** die Steuereinheit (40) außerdem zum Steuern der ersten Antriebsanordnung (24), insbesondere des Elektromotors (25), ausgestaltet ist.

5. Fahrzeug nach Anspruch 4, **dadurch gekennzeichnet, dass** die Steuereinheit (40) in der ersten Antriebsanordnung (24) umfasst und in dem Vorderrad (21) integriert ist.

6. Fahrzeug nach einem der Ansprüche 4 bis 5, **dadurch gekennzeichnet, dass** die Steuereinheit (40) mit einem BUS-System (41) des Fahrzeugs, insbesondere einem CAN-Bus, zumindest zum Abrufen von Informationen, insbesondere von Informationen zu Fahrzeugzuständen, gekoppelt ist.

7. Fahrzeug nach einem der Ansprüche 1 bis 6, **dadurch gekennzeichnet, dass** die erste Antriebsanordnung (14,24) Sicherungsmittel umfasst, die dazu ausgebildet sind, ein unbeabsichtigtes Koppeln des Antriebsmotors (16,26) mit dem Untersetzungsgetriebe (17,27) mechanisch zu verhindern, insbesondere während eines aktiven Betriebszustandes der zweiten Antriebsanordnung.

8. Fahrzeug nach Anspruch 7, **dadurch gekennzeichnet, dass** die Steuereinheit (40) dazu ausgebildet ist, dass ein Steuern des Elektromotors (25) und/oder eine Betätigung der Kupplung (26) in Abhängigkeit von den abgefragten Informationen erfolgt.

9. Fahrzeug nach einem der Ansprüche 1 bis 8, **dadurch gekennzeichnet, dass** das Untersetzungsgetriebe (17,27) ein ein- oder mehrstufiges Planetengetriebe, insbesondere ein zweistufiges Planetengetriebe oder ein "Wolfrom"-Getriebe, ist.

10. Fahrzeug nach einem der Ansprüche 1 bis 9, **dadurch gekennzeichnet, dass** die erste Antriebsanordnung (24) zur Versorgung mit elektrischer Energie mit einer Batterie (42) des Fahrzeugs gekoppelt ist.

11. Fahrzeug nach einem der Ansprüche 1 bis 10, **dadurch gekennzeichnet, dass** die erste Antriebsanordnung (14,24) zum langsamen Rangierbetrieb des Fahrzeugs in Vorwärts- und/oder Rückwärtsrichtung ausgestaltet ist, insbesondere für eine Rangiergeschwindigkeit zwischen 0 und 5km/h, vorzugsweise zwischen 0 und 2 km/h.

12. Fahrzeug nach einem der Ansprüche 1 bis 11, **dadurch gekennzeichnet, dass** der Elektromotor (15,25) ein Drehmoment zwischen 0,1 und 50Nm, insbesondere zwischen 0,5 und 10Nm aufweist.

13. Fahrzeug nach einem der Ansprüche 1 bis 12, **dadurch gekennzeichnet, dass** das Fahrzeug ein Motorrad oder ein motorradähnliches Einspur- oder Zweispurfahrzeug jeweils mit zwei, drei oder vier Rädern, insbesondere ein Roller, Scooter, Quad oder Trike, ist.

14. Fahrzeug nach einem der Ansprüche 1 bis 13, **dadurch gekennzeichnet, dass** die erste Antriebsanordnung (14,24) einen als permanenterregten Synchronmotor ausgebildeten Elektromotor umfasst, und/oder die zweite Antriebsanordnung einen Elektromotor oder einen Verbrennungsmotor umfasst.

## Claims

1. A vehicle with a front wheel (11,21) which can be driven by means of a first drive arrangement (14, 24) and with a rear wheel which can be driven by means of a second drive arrangement, wherein the first drive arrangement (14, 24) is integrated in the front wheel (11, 21), and
- comprises an electric motor (15, 25) for selectively driving the front wheel (11, 21) in a rotary motion, and
a reduction gear (17, 27) inserted between the electric motor (15, 25) and the front wheel (11, 21) which is to be driven, wherein the first drive arrangement (14, 24) furthermore comprises an actuable coupling (16, 26) for either coupling or uncoupling the electric motor (15, 25) with/from the reduction gear (17, 27), **characterised in that** the vehicle comprises a control unit (40) which is designed to actuate the coupling (26) and is configured in such a way that coupling of the first drive arrangement is possible exclusively in the event that the second drive arrangement is not in an active operating state.

2. A vehicle according to Claim 1, **characterised in that** the coupling (16, 26) is a mechanical coupling, especially a friction coupling or a claw coupling.

3. A vehicle according to one of Claims 1 to 2, **characterised in that** a stator (25a) of the electric motor (25) is formed non-rotationally with a front-wheel suspension and an output side of the reduction gear (27) is connected non-rotationally to the front wheel (21).

4. A vehicle according to one of Claims 1 to 3, **characterised in that** the control unit (40) is furthermore designed for controlling the first drive arrangement (24), especially the electric motor (25).

5. A vehicle according to Claim 4, **characterised in that** the control unit (40) is comprised in the first drive arrangement (24) and is integrated in the front wheel (21).

6. A vehicle according to one of Claims 4 to 5, **characterised in that** the control unit (40) is coupled with a BUS system (41) of the vehicle, especially a CAN bus, at least for retrieving information, especially information on vehicle states.

7. A vehicle according to one of Claims 1 to 6, **characterised in that** the first drive arrangement (14, 24) comprises securing means which are designed in order mechanically to prevent unintentional coupling of the drive motor (16, 26) with the reduction gear (17, 27), especially during an active operating state of the second drive arrangement.

8. A vehicle according to Claim 7, **characterised in that** the control unit (40) is designed for control of the electric motor (25) and/or actuation of the coupling (26) to take place dependent on the information received.

9. A vehicle according to one of Claims 1 to 8, **characterised in that** the reduction gear (17, 27) is a single-stage or multi-stage planetary gear, especially a two-stage planetary gear or a "Wolfrom" gear.

10. A vehicle according to one of Claims 1 to 9, **characterised in that** the first drive arrangement (24) is coupled with a battery (42) of the vehicle for being supplied with electric power.

11. A vehicle according to one of Claims 1 to 10, **characterised in that** the first drive arrangement (14, 24) is designed for slow manoeuvring operation of the vehicle in the forward and/or rearward direction, especially for a manoeuvring speed of between 0 and 5 km/h, preferably between 0 and 2 km/h.

12. A vehicle according to one of Claims 1 to 11, **characterised in that** the electric motor (15, 25) has a torque of between 0.1 and 50 Nm, especially between 0.5 and 10 Nm.

13. A vehicle according to one of Claims 1 to 12, **characterised in that** the vehicle is a motorcycle or a single-track or two-track vehicle similar to a motorcycle, in each case with two, three or four wheels, especially a motor scooter, scooter, quad bike or trike.

14. A vehicle according to one of Claims 1 to 13, **characterised in that** the first drive arrangement (14, 24) comprises an electric motor designed as a permanently excited synchronous motor, and/or the second drive arrangement comprises an electric motor or an internal combustion engine.

## Revendications

1. Véhicule ayant une roue avant (11, 21) pouvant être entraînée au moyen d'un premier dispositif d'entraînement (14, 24) et une roue arrière pouvant être entraînée au moyen d'un second dispositif d'entraînement, le premier dispositif d'entraînement (14,24) étant intégré dans la roue avant (11, 21), et comportant :
- un moteur électrique (15, 25) pour entraîner sélectivement en rotation la roue avant (11, 21), et
un démultiplicateur (17, 27) monté entre le moteur électrique (15, 25) et la roue avant (11, 21) à entraîner, le premier dispositif d'entraînement (14, 24) comprenant en outre un embrayage (16, 26) pouvant être actionné pour coupler ou découpler sélectivement le moteur électrique (15, 25) au démultiplicateur (17, 27),
**caractérisé en ce que**
le véhicule comporte une unité de commande (40) qui est réalisée pour permettre d'actionner l'embrayage (26) et est conformée de sorte que le couplage du premier dispositif d'entraînement soit exclusivement possible dans le cas dans lequel le second dispositif d'entraînement ne se trouve pas à l'état de fonctionnement actif.

2. Véhicule conforme à la revendication 1,
**caractérisé en ce que**
l'embrayage (16, 26) est un embrayage mécanique, en particulier un embrayage à friction ou un embrayage à griffes.

3. Véhicule conforme à l'une des revendications 1 et 2,
**caractérisé en ce que**
le stator (25a) du moteur électrique (25) est réalisé solidairement en rotation avec la suspension de la roue avant, et le côté entraîné du démultiplicateur (27) est relié solidairement en rotation à la roue avant (21).

4. Véhicule conforme à l'une des revendications 1 à 3,
**caractérisé en ce que**
l'unité de commande (40) est en outre conformée pour permettre de commander le premier dispositif d'entraînement (24), en particulier du moteur électrique (25).

5. Véhicule conforme à la revendication 4,
**caractérisé en ce que**
l'unité de commande (40) comporte le premier dispositif d'entraînement (24) et est intégrée dans la roue avant (21).

6. Véhicule conforme à l'une des revendications 4 et 5,
**caractérisé en ce que**
l'unité de commande (40) est couplée à un système de bus (41) du véhicule, en particulier un bus CAN au moins pour permettre d'avoir accès à des informations, en particulier, à des informations concernant les états du véhicule.

7. Véhicule conforme à l'une des revendications 1 à 6,
**caractérisé en ce que**
le premier dispositif d'entraînement (14, 24) comporte des moyens de sécurité qui sont réalisés de façon à empêcher mécaniquement un couplage non souhaité du moteur d'entraînement (16, 26) avec le démultiplicateur (17, 27), en particulier lorsque le second dispositif d'entraînement est à l'état de fonctionnement actif.

8. Véhicule conforme à la revendication 7,
**caractérisé en ce que**
l'unité de commande (40) est réalisée de sorte que la commande du moteur électrique (25) et/ou l'actionnement de l'embrayage (26) soit effectué(es) en fonction des informations extraites.

9. Véhicule conforme à l'une des revendications 1 à 8,
**caractérisé en ce que**
le démultiplicateur (17, 27) est une transmission planétaire à un ou à plusieurs étage(s), en particulier une transmission planétaire à deux étages ou une transmission de type "Wolfrom".

10. Véhicule conforme à l'une des revendications 1 à 9,
**caractérisé en ce que**
pour permettre l'alimentation en énergie électrique le premier dispositif d'entraînement (24) est couplé à une batterie (42) du véhicule.

11. Véhicule conforme à l'une des revendications 1 à 10,
**caractérisé en ce que**
le premier dispositif d'entraînement (14, 24) est réalisé pour permettre des manoeuvres de stationnement lentes du véhicule en marche avant et/ou en marche arrière, en particulier pour une vitesse comprise entre 0 et 5 Km/h, de préférence entre 0 et 2 km/h.

12. Véhicule conforme à l'une des revendications 1 à 11,
**caractérisé en ce que**
le moteur électrique (15, 25) a un couple compris entre 0,1 et 50 Nm, en particulier entre 0,5 et 10 Nm.

13. Véhicule conforme à l'une des revendications 1 à 12,
**caractérisé en ce qu'**
il est constitué par un motocycle ou un véhicule à une ligne de roue ou à deux lignes de roue similaire à un motocycle, respectivement avec deux, trois ou quatre roues, en particulier un roller, un scooter, un quad ou un trike.

14. Procédé conforme à l'une des revendications 1 à 13,
**caractérisé en ce que**
le premier dispositif d'entraînement (14, 24) comporte un moteur électrique réalisé sous la forme d'un moteur synchrone à excitation permanente et/ou le second dispositif d'entraînement est un moteur électrique et/ou un moteur à combustion interne.
